# FASCICULE DE BREVET EUROPEEN

(11) **EP 4 375 231 B1**
(45) Date de publication et mention de la délivrance du brevet: **22.10.2025**
(21) Numéro de dépôt: 23206985.6
(22) Date de dépôt: 31.10.2023
(51) Int. Cl.: B67D 7/14, H04B 5/00, F17C 5/00

(54) **STATION DE REMPLISSAGE DE RÉSERVOIR DE FLUIDE SOUS PRESSION**
FÜLLSTATION FÜR EINEN UNTER DRUCK STEHENDEN FLÜSSIGKEITSBEHÄLTER
FILLING STATION FOR A PRESSURISED FLUID TANK

(30) Priorité: 28.11.2022 FR 2212383
(43) Date de publication de la demande: 29.05.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: DUDRET, Stéphane, 78350 Les Loges en Josas (FR)
(74) Mandataire: Air Liquide

(56) Documents cités:
- WO-A1-2020/172100
- DE-B9- 10 241 323
- FR-A1- 3 079 907
- US-A- 6 024 142

## Description

L'invention concerne une station de remplissage de réservoir de fluide sous pression, par exemple une station de remplissage de réservoir de fluide sous pression de véhicules. Le fluide sous pression peut être de l'hydrogène gazeux sous pression, servant notamment de gaz comburant.

Le document WO 2020/172100 A1 divulgue des systèmes et méthodes de communication pour le ravitaillement en hydrogène et la recharge électrique.

**L'invention** concerne plus particulièrement une station de remplissage de réservoir de fluide sous pression comportant :
- une source de fluide sous pression ;
- une conduite de transfert de fluide comportant une extrémité amont reliée à la source de fluide sous pression et une extrémité aval ;
- un organe de raccordement relié à l'extrémité aval ;
- une unité de commande configurée pour commander un remplissage de fluide.

Les stations de remplissage de réservoirs de fluide sous pression, utilisent des organes de raccordement (appelés également « pistolet » ou « buse de remplissage ») qui doivent résister à une haute pression (plus de 900 bar par exemple) et à des températures basses (par exemple -40°C). Ces contraintes rendent ces organes de raccordement complexes et difficilement manipulables.

Dans les véhicules mettant en œuvre un carburant sous la forme d'un fluide sous pression, comme le gaz naturel comprimé ou du gaz liquéfié, ce carburant est stocké sous pression dans au moins un réservoir de fluide sous pression qui, quel que soit son matériau constitutif, doit être soumis, de manière régulière, à des tests ou contrôles ayant pour but de vérifier son état et sa résistance à la pression d'utilisation.

Les stations de remplissage peuvent ainsi s'opposer au maintien en circulation de véhicules munis de réservoirs non conformes en empêchant tout remplissage. Indépendamment, les stations de remplissage peuvent échanger des données (directement ou indirectement) avec le véhicule à remplir en fluide sous pression, notamment pendant le remplissage. Ceci est rendu nécessaire pour permettre l'optimisation et la sécurisation des opérations de remplissage, en particulier pour des opérations de remplissage rapides et/ou à haute pression.

Ceci est particulièrement pertinent lorsque l'on cherche à diminuer le temps nécessaire au remplissage, ou lorsque l'on cherche à optimiser la quantité d'hydrogène délivré par rapport aux capacités physiques du réservoir, ou encore lorsque l'on cherche à réduire le coût énergétique d'une opération de remplissage.

Dans le cas d'une communication entre le véhicule et la station de remplissage, il est par exemple prévu un transfert de données telles que l'une au moins parmi : la température dans le réservoir, la pression dans le réservoir, le volume du réservoir, la pression maximale admissible dans le réservoir, l'état de raccordement au réservoir. Cette communication est rendue possible par l'intégration, dans la station de remplissage, d'un organe de communication pour permettre d'échanger des données avec le véhicule. Cet organe de communication peut être en communication directe avec le véhicule et/ou en communication indirecte par l'intermédiaire d'un serveur distant (dans ce cas, la station de remplissage et le véhicule sont en communication avec le serveur distant et l'échange de données est réalisé par l'intermédiaire du serveur distant).

Dans le cas d'une communication directe entre la station de remplissage et le véhicule, l'organe de communication peut comporter un module de communication en champ proche à antenne émettrice, par exemple un module de radio-identification actif tel qu'un module NFC. Un tel module comporte généralement une antenne émettrice d'un champ magnétique, disposée sur l'organe de raccordement. Ce module de communication actif est ainsi agencé pour initier une communication avec un autre module de communication en champ proche disposé au niveau de l'entrée du réservoir à remplir de sorte à permettre l'établissement d'une communication en champ proche entre le véhicule et la station de remplissage et à l'initiative de l'organe de raccordement, lorsque l'organe de raccordement est à proximité de l'entrée du réservoir à remplir ou inséré dans l'entrée du réservoir à remplir.

Dans le cas d'une communication indirecte par l'intermédiaire d'un serveur distant, l'organe de communication peut comporter une interface de communication filaire ou sans fil pour échanger des données avec un serveur distant. Bien que la station de remplissage soit apte à échanger des données avec un serveur distant, il reste préférable qu'elle puisse identifier elle-même le véhicule, avant de procéder à son remplissage en fluide sous pression. Une telle identification peut se faire au moyen du module de radio-identification actif tel que décrit ci-dessus.

Pour permettre au module de radio-identification actif d'être alimenté en énergie électrique, mais aussi pour permettre à l'unité de commande de la station de remplissage de commander le module de radio-identification actif, il est nécessaire de le relier à l'unité de commande avec au moins un câble électrique intégré à la conduite de transfert. Un tel câble électrique est complexe à mettre en œuvre et est une source de défaillance. De plus, l'alimentation électrique pose des problèmes de sécurité dans cette zone à risque (gaz inflammable).

La présente invention vise à remédier efficacement à ces inconvénients en proposant une station de remplissage de réservoir de fluide sous pression, notamment d'hydrogène gazeux sous pression, comportant :
- une source de fluide sous pression ;
- une conduite de transfert de fluide comportant une extrémité amont reliée à la source de fluide sous pression et une extrémité aval ;
- un organe de raccordement relié à l'extrémité aval ;
- une unité de commande configurée pour commander un remplissage de fluide ;
- un logement pour recevoir l'organe de raccordement, le logement étant notamment à poste fixe, le logement et l'organe de raccordement étant configurés pour permettre à l'organe de raccordement d'être amovible par rapport au logement, l'organe de raccordement étant configuré pour être dans une première configuration dans laquelle il est reçu par le logement et pour être dans une deuxième configuration dans laquelle il est en dehors du logement ;
l'organe de raccordement comportant un module de radio-identification passif comprenant une première antenne, le logement comportant un module de radio-identification actif comportant une deuxième antenne, le module de radio-identification actif étant configuré pour que la deuxième antenne génère un champ magnétique apte à alimenter en énergie le module de radio-identification passif, lorsque l'organe de raccordement est dans la première configuration.

Ceci permet d'améliorer la fiabilité d'une station de remplissage sans altérer la sécurité physique de la zone autour de laquelle le remplissage a lieu, tout en améliorant la sécurité des opérations de remplissage. Un tel organe de raccordement peut être alternativement en communication en champ proche, c'est-à-dire à une distance inférieure à quelques dizaines de centimètres ou inférieure à quelques dizaines de millimètres, avec la station de remplissage à laquelle il est raccordé et avec le véhicule dont le réservoir doit être rempli. Ceci permet la mise en place d'un procédé de sécurisation d'une opération de remplissage d'un réservoir de fluide sous pression.

Selon une réalisation, le module de radio-identification actif est configuré pour permettre un couplage magnétique entre la première antenne et la deuxième antenne, lorsque l'organe de raccordement est dans la première configuration.

Selon une réalisation, la première antenne et la deuxième antenne comportent chacune au moins une spire.

Selon une réalisation, l'organe de raccordement et le logement sont configurés pour qu'au moins une spire de la première antenne s'étende dans le même plan que le plan dans lequel s'étend au moins une spire de la deuxième antenne, lorsque l'organe de raccordement est dans la première configuration.

Selon une réalisation, l'unité de commande est configurée pour commander le module de radio-identification actif pour que le module de radio-identification actif :
- détecte la présence du module de radio-identification passif lorsque l'organe de raccordement est dans la première configuration ;
- échange des données avec le module de radio-identification passif lorsque l'organe de raccordement est dans la première configuration ;

Selon une réalisation, la station de remplissage comporte une première interface de communication, par exemple avec un serveur distant, l'unité de commande étant configurée pour :
- générer ou recevoir via la première interface de communication ou recevoir du module de radio-identification passif via le module de radio-identification actif, au moins une première donnée, notamment une donnée d'authentification ou une donnée de session de remplissage ou une donnée de chiffrement, la première donnée étant notamment à usage unique ;
- commander le module de radio-identification actif pour que le module de radio-identification actif échange au moins une deuxième donnée avec le module de radio-identification passif, l'organe de raccordement étant dans la première configuration, le module de radio-identification alimentant en énergie le module de radio-identification passif ;
- recevoir une autorisation de remplissage du réservoir, via la première interface de communication, préalablement à la commande d'un remplissage de fluide.

Selon une réalisation, l'organe de raccordement est configuré pour être raccordé de façon étanche à une entrée d'un réservoir de fluide sous pression à remplir.

L'invention concerne en outre une installation comportant une station de remplissage telle que décrite ci-dessus et un véhicule comportant une entrée d'un réservoir de fluide sous pression à remplir, l'entrée du réservoir de fluide sous pression comportant un deuxième module de radio-identification actif comportant une troisième antenne, l'organe de raccordement étant configuré pour être dans une troisième configuration dans laquelle il est raccordé, notamment de façon amovible et étanche, à l'entrée du réservoir de fluide sous pression, le deuxième module de radio-identification actif étant configuré pour que la troisième antenne génère un champ magnétique apte à alimenter en énergie le module de radio-identification passif, lorsque l'organe de raccordement est dans la troisième configuration.

Selon une réalisation, la troisième antenne comporte au moins une spire, l'organe de raccordement et l'entrée du réservoir de fluide sous pression étant configurés pour qu'au moins une spire de la première antenne s'étende dans le même plan que le plan dans lequel s'étend au moins une spire de la troisième antenne, lorsque l'organe de raccordement est dans la troisième configuration.

Selon une réalisation, le véhicule comporte une deuxième unité de commande configurée pour commander le deuxième module de radio-identification actif pour que le deuxième module de radio-identification actif :
- détecte la présence du module de radio-identification passif lorsque l'organe de raccordement est dans la troisième configuration ;
- échange des données avec le module de radio-identification passif, l'organe de raccordement étant dans la troisième configuration, le deuxième module de radio-identification alimentant en énergie le module de radio-identification passif.

Selon une réalisation, le véhicule comporte une quatrième donnée relative à un identifiant unique du véhicule et/ou relative à un identifiant unique du réservoir du véhicule et/ou relative à l'intégrité du réservoir du véhicule.

L'invention concerne en outre un procédé de sécurisation d'un remplissage d'un réservoir de fluide sous pression à l'aide d'une une installation comportant une station de remplissage de réservoir de fluide sous pression comportant :
- une source de fluide sous pression ;
- une conduite de transfert de fluide comportant une extrémité amont reliée à la source de fluide sous pression et une extrémité aval ;
- un organe de raccordement relié à l'extrémité aval ;
- une unité de commande configurée pour commander un remplissage de fluide ;
- un logement pour recevoir l'organe de raccordement, le logement étant notamment à poste fixe, le logement et l'organe de raccordement étant configurés pour permettre à l'organe de raccordement d'être amovible par rapport au logement, l'organe de raccordement étant configuré pour être dans une première configuration dans laquelle il est reçu par le logement et pour être dans une deuxième configuration dans laquelle il est en dehors du logement ;
- une première interface de communication, par exemple avec un serveur distant ; l'organe de raccordement comportant un module de radio-identification passif comprenant une première antenne, le logement comportant un module de radio-identification actif comportant une deuxième antenne, le module de radio-identification actif étant configuré pour que la deuxième antenne génère un champ magnétique apte à alimenter en énergie le module de radio-identification passif, lorsque l'organe de raccordement est dans la première configuration, l'installation comportant un véhicule comportant une entrée d'un réservoir de fluide sous pression à remplir, l'entrée du réservoir de fluide sous pression comportant un deuxième module de radio-identification actif comportant une troisième antenne, l'organe de raccordement étant configuré pour être dans une troisième configuration dans laquelle il est raccordé, notamment de façon amovible et étanche, à l'entrée du réservoir de fluide sous pression, le deuxième module de radio-identification actif étant configuré pour que la troisième antenne génère un champ magnétique apte à alimenter en énergie le module de radio-identification passif, lorsque l'organe de raccordement est dans la troisième configuration ; le procédé comportant les étapes de :
- a) générer au moins une première donnée, notamment une donnée d'authentification ou une donnée de session de remplissage ou une donnée de chiffrement, la première donnée étant notamment à usage unique, la première donnée étant notamment reçue par la première interface de communication ou générée par l'unité de commande ou générée par le module de radio-identification passif ;
- b) échanger au moins une deuxième donnée entre le module de radio-identification actif et le module de radio-identification passif, l'organe de raccordement étant dans la première configuration, le module de radio-identification actif alimentant en énergie le module de radio-identification passif ;
- c) échanger au moins une troisième donnée entre le deuxième module de radio-identification actif et le module de radio-identification passif, l'organe de raccordement étant dans la troisième configuration, le deuxième module de radio-identification actif alimentant en énergie le module de radio-identification passif ;
- d) recevoir une autorisation de remplissage du réservoir via la première interface de communication, notamment si la troisième donnée est égale à une valeur prédéterminée dépendant de la première donnée et/ou de la deuxième donnée ;

Selon une réalisation, le véhicule comporte une quatrième donnée relative à un identifiant unique du véhicule et/ou relative à un identifiant unique du réservoir du véhicule et/ou relative à l'intégrité du réservoir du véhicule.

Selon une réalisation, le véhicule comporte une deuxième unité de commande.

Selon une réalisation, le procédé comporte l'étape de générer une cinquième donnée en fonction de la troisième donnée et de la quatrième donnée, la cinquième donnée étant notamment générée par la deuxième unité de commande.

Selon une réalisation, l'étape d) de recevoir une autorisation de remplissage du réservoir via la première interface de communication, est réalisée si la cinquième donnée est égale à une deuxième valeur prédéterminée dépendant de la quatrième donnée et/ou de la cinquième donnée.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une représentation schématique d'une station selon l'invention ;
[Fig. 2] la figure 2 est une représentation schématique d'une installation comportant la station de la figure 1.

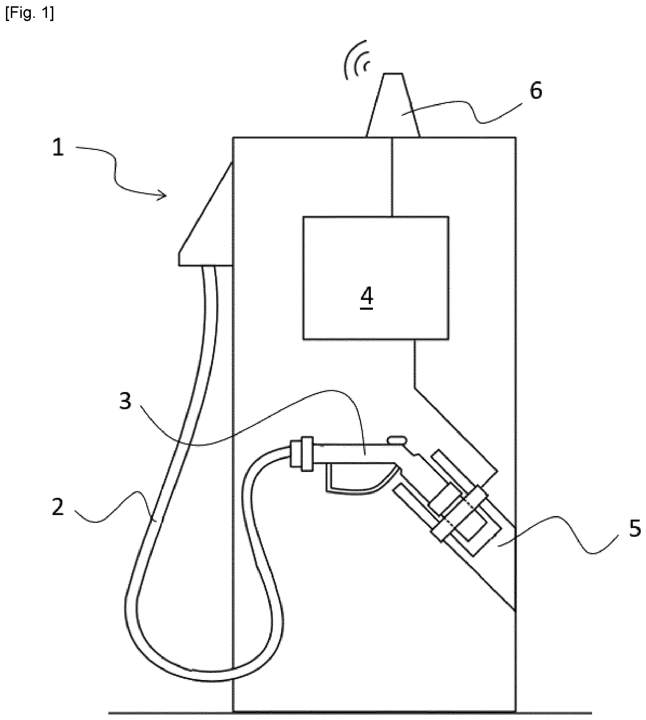

En référence à la figure 1, on a représenté une station de remplissage 1 de réservoir de fluide sous pression, notamment d'hydrogène gazeux sous pression.

La station de remplissage 1 comporte :
- une source de fluide sous pression ;
- une conduite de transfert 2 de fluide comportant une extrémité amont reliée à la source de fluide sous pression et une extrémité aval ;
- un organe de raccordement 3 relié à l'extrémité aval, notamment un flexible ;
- une unité de commande 4 configurée pour commander un remplissage de fluide sous pression ;
- un logement 5 pour recevoir l'organe de raccordement.

Le logement 5 est à poste fixe. Par exemple, la station de remplissage 1 comporte une borne de distribution et le logement 5 est solidaire de la borne de distribution.

Le logement 5 et l'organe de raccordement 3 sont configurés pour permettre à l'organe de raccordement 3 d'être amovible par rapport au logement 5.

L'organe de raccordement 3 est configuré pour être dans une première configuration dans laquelle il est reçu par le logement 5 et pour être dans une deuxième configuration dans laquelle il est en dehors du logement 5.

Le logement 5 peut comporter un capteur de présence de l'organe de raccordement 3.

L'organe de raccordement 3 comporte un module de radio-identification passif comprenant une première antenne.

Le logement 5 comporte un module de radio-identification actif comportant une deuxième antenne.

Le module de radio-identification actif est configuré pour que la deuxième antenne génère un champ magnétique apte à alimenter en énergie le module de radio-identification passif, lorsque l'organe de raccordement est dans la première configuration.

Le module de radio-identification actif est configuré pour permettre un couplage magnétique entre la première antenne et la deuxième antenne, lorsque l'organe de raccordement est dans la première configuration.

Le module de radio-identification passif peut être configuré pour qu'un couplage magnétique ne puisse avoir lieu avec la deuxième antenne, que lorsque l'organe de raccordement est dans la première configuration. Autrement dit, dès que l'organe de raccordement 3 sort du logement 5 et que la distance entre la première antenne et la deuxième antenne devient supérieure à un seuil prédéterminé, le couplage entre la première antenne et la deuxième antenne n'est plus possible. Ce seuil est par exemple compris entre 10 et 30 centimètres. En variante, ce seuil est compris entre 10 et 30 millimètres.

Le module de radio-identification passif et le module de radio-identification actif sont réalisés chacun sous la forme d'un composant électronique, par exemple de type RFID **(pour** « **Radio** Frequency Identification ») ou de type NFC (pour « Near Field Communication »). Ils permettent entre eux, un échange de données en champ proche, c'est-à-dire sans contact et à une distance d'au maximum quelques dizaines de centimètres en l'absence de toute interférence ou de tout matériau pouvant empêcher la propagation des ondes électromagnétiques. Cette distance est par exemple au maximum 30 centimètres ou au maximum de 30 millimètres.

Plus précisément, le module de radio-identification actif possède une source d'énergie lui permettant de faire circuler un courant électrique dans la deuxième antenne qui émet alors un champ électromagnétique jouant un triple rôle lorsque le module de radio-identification passif est à une distance inférieure au seuil, ce qui est le cas lorsque l'organe de raccordement est dans la première configuration :
- alimenter en énergie électrique le module de radio-identification passif ;
- transmettre des données à destination du module de de radio-identification passif ;
- recevoir des données en provenance du module de radio-identification passif.

Le module de radio-identification actif peut comporter une unité de calcul et/ou une mémoire, notamment une mémoire non volatile.

Par ailleurs, le module de radio-identification passif est alimenté en énergie par le champ électromagnétique généré par la deuxième antenne. Il ne peut donc être activé et répondre au module de radio-identification actif que lorsque qu'il existe un couplage magnétique entre la première antenne et la deuxième antenne, et ce, à l'initiative du module de radio-identification actif.

Le module de radio-identification passif peut comporter une unité de calcul et/ou une mémoire, notamment une mémoire non volatile. L'unité de calcul est alimentée par le champ électromagnétique généré par la deuxième antenne. Cette unité de calcul peut permettre d'effectuer des opérations mathématiques notamment pour des besoins de cryptographie, par exemple pour répondre à une requête émise par le module de radio-identification actif. Une telle requête peut servir à réaliser une signature numérique, un chiffrement de données, ou une authentification numérique.

Le module de radio-identification passif peut en outre comporter une réserve d'énergie électrique, alimentée lorsqu'il existe un couplage entre la première et la deuxième antenne. Une telle réserve d'énergie électrique reste insuffisante pour permettre au module de radio-identification passif de générer un champ magnétique pour initier une communication avec le module de radio-identification actif, mais il est suffisant pour permettre de réveiller l'unité de calcul et/ou la mémoire et/ou un capteur de mesure, même lorsque l'organe de raccordement n'est pas dans la première configuration.

La première antenne et la deuxième antenne comportent chacune au moins une spire.

L'organe de raccordement 3 et le logement 5 sont configurés pour qu'au moins une spire de la première antenne s'étende dans le même plan que le plan dans lequel s'étend au moins une spire de la deuxième antenne, lorsque l'organe de raccordement 3 est dans la première configuration.

L'unité de commande 4 est configurée pour commander le module de radio-identification actif pour que le module de radio-identification actif :
- détecte la présence du module de radio-identification passif lorsque l'organe de raccordement 3 est dans la première configuration ;
- échange des données avec le module de radio-identification passif lorsque l'organe de raccordement 3 est dans la première configuration ;
- détecte le passage de l'organe de raccordement de la première configuration dans la deuxième configuration.

Ainsi, il est possible de se passer de capteur de présence au niveau du logement 5, pour détecter l'insertion et/ou le retrait de de l'organe de raccordement 3 relativement au logement 5.

La station de remplissage 1 comporte une première interface de communication 6, avec un serveur distant ou avec un véhicule dont le réservoir est à remplir.

L'unité de commande 4 est configurée pour :
- générer ou recevoir via la première interface de communication 6 ou recevoir du module de radio-identification passif via le module de radio-identification actif, au moins une première donnée, notamment une donnée d'authentification ou une donnée de session de remplissage ou une donnée de chiffrement, la première donnée étant notamment à usage unique ;
- commander le module de radio-identification actif pour que le module de radio-identification actif échange au moins une deuxième donnée avec le module de radio-identification passif, l'organe de raccordement étant dans la première configuration, le module de radio-identification alimentant en énergie le module de radio-identification passif ;
- recevoir une autorisation de remplissage du réservoir, via la première interface de communication 6, préalablement à la commande d'un remplissage de fluide.

L'organe de raccordement 3 est configuré pour être raccordé de façon étanche à une entrée 7 d'un réservoir de fluide sous pression à remplir.

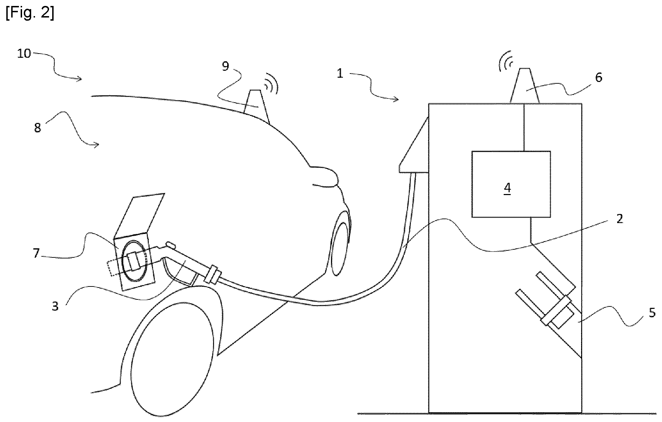

La figure 2 représente une installation 10 comportant la station de remplissage 1 telle que décrite ci-dessus et un véhicule 8 comportant une entrée 7 d'un réservoir de fluide sous pression à remplir.

L'entrée 7 du réservoir de fluide sous pression comporte un deuxième module de radio-identification actif comportant une troisième antenne.

Le deuxième module de radio-identification actif est similaire, dans son fonctionnement, au module de radio-identification actif de la station de remplissage 1 tel que décrit en lien avec la figure 1.

L'organe de raccordement 3 est configuré pour être dans une troisième configuration dans laquelle il est raccordé, notamment de façon amovible et étanche, à l'entrée 7 du réservoir de fluide sous pression, le deuxième module de radio-identification actif étant configuré pour que la troisième antenne génère un champ magnétique apte à alimenter en énergie le module de radio-identification passif, lorsque l'organe de raccordement 3 est dans la troisième configuration.

De manière similaire à ce qui a été décrit en lien avec la figure 1, le deuxième module de radio-identification actif et le module de radio-identification passif peuvent échanger des données en champ proche, c'est-à-dire sans contact et à une distance d'au maximum quelques dizaines de centimètres en l'absence de toute interférence ou de tout matériau pouvant empêcher la propagation des ondes électromagnétiques. Cette distance est par exemple au maximum 30 centimètres ou au maximum de 30 millimètres.

De manière similaire à ce qui a été décrit en lien avec la figure 1, le module de radio-identification passif peut être configuré pour qu'un couplage magnétique ne puisse avoir lieu avec la troisième antenne, que lorsque l'organe de raccordement 3 est dans la troisième configuration. Autrement dit, dès que la distance entre la troisième antenne et la deuxième antenne devient supérieure à un deuxième seuil prédéterminé, le couplage entre la troisième antenne et la deuxième antenne n'est plus possible. Ce deuxième seuil est par exemple compris entre 10 et 30 centimètres. En variante, ce deuxième seuil est compris entre 10 et 30 millimètres.

Le deuxième module de radio-identification actif possède une source d'énergie lui permettant de faire circuler un courant électrique dans la troisième antenne qui émet alors un champ électromagnétique jouant un triple rôle lorsque le module de radio-identification passif est à une distance inférieure au deuxième seuil, ce qui est le cas lorsque l'organe de raccordement est dans la troisième configuration :
- alimenter en énergie électrique le module de radio-identification passif ;
- transmettre des données à destination du module de de radio-identification passif ;
- recevoir des données en provenance du module de radio-identification passif.

Le deuxième module de radio-identification actif peut comporter une unité de calcul et/ou une mémoire, notamment une mémoire non volatile.

Lorsque l'organe de raccordement 3 est dans la troisième configuration, le module de radio-identification passif est alimenté en énergie par le champ électromagnétique généré par la troisième antenne. Dans ce cas, le module de radio-identification passif peut être activé et répondre au deuxième module de radio-identification actif que lorsque qu'il existe un couplage magnétique entre la troisième antenne et la première antenne, et ce, à l'initiative du deuxième module de radio-identification actif.

La troisième antenne comporte au moins une spire. L'organe de raccordement 3 et l'entrée 7 du réservoir de fluide sous pression sont configurés pour qu'au moins une spire de la première antenne s'étende dans le même plan que le plan dans lequel s'étend au moins une spire de la troisième antenne, lorsque l'organe de raccordement 3 est dans la troisième configuration.

Le véhicule 8 comporte une deuxième unité de commande configurée pour commander le deuxième module de radio-identification actif pour que le deuxième module de radio-identification actif :
- détecte la présence du module de radio-identification passif lorsque l'organe de raccordement 3 est dans la troisième configuration ;
- échange des données avec le module de radio-identification passif, l'organe de raccordement 3 étant dans la troisième configuration, le deuxième module de radio-identification alimentant en énergie le module de radio-identification passif.

Une telle installation peut permettre une authentification, notamment une authentification mutuelle, entre une station de remplissage et un véhicule, préalablement à une opération de remplissage.

Ceci permet de limiter les opportunités, pour un intervenant malveillant, de remplir un réservoir de fluide dans des conditions incompatibles avec la règlementation.

L'installation comporte un serveur distant apte à communiquer à la fois avec la station de remplissage et avec le véhicule.

Le véhicule 8 comporte une deuxième interface de communication 9. Cette deuxième interface de communication 9 permet au véhicule de communiquer avec le serveur distant, soit en se connectant à la première interface de communication 6, soit en utilisant un réseau de type WiFi, ou GSM ou équivalent.

Un procédé d'authentification tel que mentionné ci-dessus comporte par exemple les étapes suivantes :
- a) le serveur distant génère une donnée informatique de type challenge-réponse, comportant un challenge et une réponse attendue ;
- b) l'unité de commande 4 reçoit du serveur distant le challenge ;
- c) l'unité de commande 4 transmet le challenge au module de radio-identification passif par l'intermédiaire du module de radio-identification actif alors que l'organe de raccordement 3 est dans la première configuration ;
- d) la deuxième unité de commande configure le deuxième module de radio-identification actif pour qu'il alimente en énergie le module de radio-identification passif et pour qu'il fasse l'acquisition du challenge qui est stocké dans le module de radio-identification passif, alors que l'organe de raccordement 3 est dans la troisième configuration, c'est-à-dire lorsqu'il existe un couplage magnétique entre la première antenne et la troisième antenne ;
- e) la deuxième unité de commande effectue un calcul cryptographique à partir du challenge pour déterminer une deuxième réponse ;
- f) la deuxième unité de commande transmet au serveur distant la deuxième réponse, via la deuxième interface de communication 9 ;
- g) le serveur distant vérifie que la deuxième réponse est légitime par rapport à la réponse attendue ;
- h) le serveur distant communique au véhicule et/ou à la station de remplissage une autorisation de remplissage si la réponse est légitime ou une interdiction de remplissage si la réponse n'est pas légitime

Les étapes a) et b) peuvent être renouvelées périodiquement, par exemple toutes les minutes. En variante, les étapes a) et b) peuvent être initiée sur détection d'une demande de remplissage d'un véhicule ou sur détection de la présence d'un véhicule à proximité de la station de remplissage.

En outre le procédé d'authentification peut comporter les étapes suivantes, après qu'une autorisation de remplissage ait été communiquée au véhicule et/ou à la station de remplissage :
- la deuxième unité de commande enregistre des paramètres liés au remplissage du réservoir ;
- la deuxième unité de commande calcule une signature numérique liée aux paramètres ;
- la deuxième unité de commande transmet la signature numérique au serveur distant et au module de radio-identification passif via le deuxième module de radio-identification actif ; le module de radio-identification passif sauvegarde la signature numérique, notamment dans la mémoire non volatile;
- l'organe de raccordement étant dans la première configuration, le module de radio-identification actif est commandé par l'unité de commande pour lire la signature numérique telle que sauvegardée dans le module de radio-identification passif ;
- l'unité de commande transmet au serveur distant la signature numérique ;
- le serveur distant compare la signature numérique reçue du véhicule et celle reçue de la station de remplissage.

Une telle installation permet aussi de mettre en œuvre un chiffrement des données transmises entre le serveur distant et le véhicule et/ou entre le serveur distant et la station de remplissage. Un algorithme à clés publiques peut être mis en œuvre. Par exemple, l'unité de commande comporte une clé publique de station et une clé secrète de station. La deuxième unité de commande comporte une clé publique de véhicule et une clé secrète de véhicule.

Avant de procéder au remplissage d'un réservoir, l'unité de commande écrit la clé publique de station dans le module de radio-identification passif, alors que l'organe de raccordement est dans la première configuration.

Lorsque l'organe de raccordement est dans la troisième configuration, la clé publique de station est transmise à la deuxième unité de commande, via le deuxième module de radio-identification actif.

La deuxième unité de commande calcule une clé temporaire en chiffrant la clé publique de véhicule avec la clé publique de station. La deuxième unité de commande transmet la clé temporaire à la station de remplissage, via la deuxième interface de communication 9.

L'unité de commande 4 calcule la clé publique de véhicule en déchiffrant la clé temporaire avec la clé secrète de station.

Ainsi, la station de remplissage connait la clé publique de véhicule et le véhicule connait la clé publique de station, ce qui permet au véhicule et à la station de remplissage de chiffrer l'ensemble des communications à destination de l'un ou de l'autre. Chaque message ainsi échangé entre le véhicule et la station de remplissage pourra être déchiffré à l'aide de la clé secrète de station et respectivement de la clé secrète de véhicule.

## Revendications

1. Station de remplissage (1) de réservoir de fluide sous pression, notamment d'hydrogène gazeux sous pression, comportant :
- une source de fluide sous pression ;
- une conduite de transfert (2) de fluide comportant une extrémité amont reliée à la source de fluide sous pression et une extrémité aval ;
- un organe de raccordement (3) relié à l'extrémité aval ;
- une unité de commande (4) configurée pour commander un remplissage de fluide ;
**caractérisée en ce que** la station comprend en outre
- un logement (5) pour recevoir l'organe de raccordement, le logement (5) étant notamment à poste fixe, le logement (5) et l'organe de raccordement (3) étant configurés pour permettre à l'organe de raccordement (3) d'être amovible par rapport au logement (5), l'organe de raccordement (3) étant configuré pour être dans une première configuration dans laquelle il est reçu par le logement (5) et pour être dans une deuxième configuration dans laquelle il est en dehors du logement (5) ;
l'organe de raccordement (3) comportant un module de radio-identification passif comprenant une première antenne, le logement (5) comportant un module de radio-identification actif comportant une deuxième antenne, le module de radio-identification actif étant configuré pour que la deuxième antenne génère un champ magnétique apte à alimenter en énergie le module de radio-identification passif, lorsque l'organe de raccordement est dans la première configuration.

2. Station de remplissage (1) selon la revendication précédente, le module de radio-identification actif étant configuré pour permettre un couplage magnétique entre la première antenne et la deuxième antenne, lorsque l'organe de raccordement (3) est dans la première configuration.

3. Station de remplissage (1) selon l'une des revendications précédentes, la première antenne et la deuxième antenne comportant chacune au moins une spire.

4. Station de remplissage (1) selon la revendication précédente, l'organe de raccordement (3) et le logement (5) étant configurés pour qu'au moins une spire de la première antenne s'étende dans le même plan que le plan dans lequel s'étend au moins une spire de la deuxième antenne, lorsque l'organe de raccordement (3) est dans la première configuration.

5. Station de remplissage (1) selon l'une des revendications précédentes, l'unité de commande (4) étant configurée pour commander le module de radio-identification actif pour que le module de radio-identification actif :
- détecte la présence du module de radio-identification passif lorsque l'organe de raccordement (3) est dans la première configuration ;
- échange des données avec le module de radio-identification passif lorsque l'organe de raccordement (3) est dans la première configuration.

6. Station de remplissage (1) selon l'une des revendications précédentes, comportant une première interface de communication (6), par exemple avec un serveur distant, l'unité de commande (4) étant configurée pour :
- générer ou recevoir via la première interface de communication (6) ou recevoir du module de radio-identification passif via le module de radio-identification actif, au moins une première donnée, notamment une donnée d'authentification ou une donnée de session de remplissage ou une donnée de chiffrement, la première donnée étant notamment à usage unique ;
- commander le module de radio-identification actif pour que le module de radio-identification actif échange au moins une deuxième donnée avec le module de radio-identification passif, l'organe de raccordement étant dans la première configuration, le module de radio-identification alimentant en énergie le module de radio-identification passif ;
- recevoir une autorisation de remplissage du réservoir, via la première interface de communication (6), préalablement à la commande d'un remplissage de fluide.

7. Station de remplissage (1) selon l'une des revendications précédentes, l'organe de raccordement (3) étant configuré pour être raccordé de façon étanche à une entrée (7) d'un réservoir de fluide sous pression à remplir.

8. Installation (10) comportant une station de remplissage (1) selon l'une quelconque des revendications précédentes et un véhicule (8) comportant une entrée (7) d'un réservoir de fluide sous pression à remplir, l'entrée (7) du réservoir de fluide sous pression comportant un deuxième module de radio-identification actif comportant une troisième antenne, l'organe de raccordement (3) étant configuré pour être dans une troisième configuration dans laquelle il est raccordé, notamment de façon amovible et étanche, à l'entrée (7) du réservoir de fluide sous pression, le deuxième module de radio-identification actif étant configuré pour que la troisième antenne génère un champ magnétique apte à alimenter en énergie le module de radio-identification passif, lorsque l'organe de raccordement (3) est dans la troisième configuration.

9. Installation (10) selon la revendication précédente, la troisième antenne comportant au moins une spire, l'organe de raccordement (3) et l'entrée (7) du réservoir de fluide sous pression étant configurés pour qu'au moins une spire de la première antenne s'étende dans le même plan que le plan dans lequel s'étend au moins une spire de la troisième antenne, lorsque l'organe de raccordement (3) est dans la troisième configuration.

10. Installation (10) selon l'une des revendications 8 et 9, le véhicule (8) comportant une deuxième unité de commande configurée pour commander le deuxième module de radio-identification actif pour que le deuxième module de radio-identification actif :
- détecte la présence du module de radio-identification passif lorsque l'organe de raccordement (3) est dans la troisième configuration ;
- échange des données avec le module de radio-identification passif, l'organe de raccordement (3) étant dans la troisième configuration, le deuxième module de radio-identification alimentant en énergie le module de radio-identification passif.

11. Procédé de sécurisation d'un remplissage d'un réservoir de fluide sous pression à l'aide d'une une installation comportant une station de remplissage (1) de réservoir de fluide sous pression comportant :
- une source de fluide sous pression ;
- une conduite de transfert (2) de fluide comportant une extrémité amont reliée à la source de fluide sous pression et une extrémité aval ;
- un organe de raccordement (3) relié à l'extrémité aval ;
- une unité de commande (4) configurée pour commander un remplissage de fluide ;
- un logement (5) pour recevoir l'organe de raccordement, le logement étant notamment à poste fixe, le logement et l'organe de raccordement étant configurés pour permettre à l'organe de raccordement d'être amovible par rapport au logement, l'organe de raccordement étant configuré pour être dans une première configuration dans laquelle il est reçu par le logement et pour être dans une deuxième configuration dans laquelle il est en dehors du logement ; **caractérisé par**
- une première interface de communication, par exemple avec un serveur distant ; l'organe de raccordement comportant un module de radio-identification passif comprenant une première antenne, le logement comportant un module de radio-identification actif comportant une deuxième antenne, le module de radio-identification actif étant configuré pour que la deuxième antenne génère un champ magnétique apte à alimenter en énergie le module de radio-identification passif, lorsque l'organe de raccordement est dans la première configuration, l'installation comportant un véhicule comportant une entrée d'un réservoir de fluide sous pression à remplir, l'entrée du réservoir de fluide sous pression comportant un deuxième module de radio-identification actif comportant une troisième antenne, l'organe de raccordement étant configuré pour être dans une troisième configuration dans laquelle il est raccordé, notamment de façon amovible et étanche, à l'entrée du réservoir de fluide sous pression, le deuxième module de radio-identification actif étant configuré pour que la troisième antenne génère un champ magnétique apte à alimenter en énergie le module de radio-identification passif, lorsque l'organe de raccordement est dans la troisième configuration ; le procédé comportant les étapes de :
- a) générer au moins une première donnée, notamment une donnée d'authentification ou une donnée de session de remplissage ou une donnée de chiffrement, la première donnée étant notamment à usage unique, la première donnée étant notamment reçue par la première interface de communication ou générée par l'unité de commande ou générée par le module de radio-identification passif ;
- b) échanger au moins une deuxième donnée entre le module de radio-identification actif et le module de radio-identification passif, l'organe de raccordement étant dans la première configuration, le module de radio-identification actif alimentant en énergie le module de radio-identification passif ;
- c) échanger au moins une troisième donnée entre le deuxième module de radio-identification actif et le module de radio-identification passif, l'organe de raccordement étant dans la troisième configuration, le deuxième module de radio-identification actif alimentant en énergie le module de radio-identification passif ;
- d) recevoir une autorisation de remplissage du réservoir via la première interface de communication, notamment si la troisième donnée est égale à une valeur prédéterminée dépendant de la première donnée et/ou de la deuxième donnée.

## Patentansprüche

1. Füllstation (1) für einen Druckfluidbehälter, insbesondere für unter Druck stehenden gasförmigen Wasserstoff, umfassend:
- eine Druckfluidquelle;
- eine Fluidtransferleitung (2), die ein mit der Druckfluidquelle verbundenes stromaufwärtiges Ende und ein stromabwärtiges Ende umfasst;
- ein mit dem stromabwärtigen Ende verbundenes Verbindungsorgan (3) ;
- eine Steuereinheit (4), die konfiguriert ist, um ein Befüllen mit Fluid zu steuern;
**dadurch gekennzeichnet, dass** die Station ferner umfasst
- ein Gehäuse (5) zur Aufnahme des Verbindungsorgans, wobei das Gehäuse (5) insbesondere an einer festen Position ist, wobei das Gehäuse (5) und das Verbindungsorgan (3) so konfiguriert sind, dass das Verbindungsorgan (3) in Bezug auf das Gehäuse (5) abnehmbar ist, wobei das Verbindungsorgan (3) so konfiguriert ist, dass es sich in einer ersten Konfiguration befindet, in der es vom Gehäuse (5) aufgenommen wird, und in einer zweiten Konfiguration, in der es sich außerhalb des Gehäuses (5) befindet; wobei das Verbindungsorgan (3) ein passives Funkidentifikationsmodul umfasst, das eine erste Antenne umfasst, wobei das Gehäuse (5) ein aktives Funkidentifikationsmodul umfasst, das eine zweite Antenne umfasst, wobei das aktive Funkidentifikationsmodul so konfiguriert ist, dass die zweite Antenne ein Magnetfeld erzeugt, das geeignet ist, das passive Funkidentifikationsmodul mit Energie zu versorgen, wenn sich das Verbindungsorgan in der ersten Konfiguration befindet.

2. Füllstation (1) nach dem vorhergehenden Anspruch, wobei das aktive Funkidentifikationsmodul so konfiguriert ist, dass es eine magnetische Kopplung zwischen der ersten Antenne und der zweiten Antenne ermöglicht, wenn sich das Verbindungsorgan (3) in der ersten Konfiguration befindet.

3. Füllstation (1) nach einem der vorhergehenden Ansprüche, wobei die erste Antenne und die zweite Antenne jeweils mindestens eine Windung aufweisen.

4. Füllstation (1) nach dem vorhergehenden Anspruch, wobei das Verbindungsorgan (3) und das Gehäuse (5) so konfiguriert sind, dass sich mindestens eine Windung der ersten Antenne in derselben Ebene erstreckt wie die Ebene, in der sich mindestens eine Windung der zweiten Antenne erstreckt, wenn sich das Verbindungsorgan (3) in der ersten Konfiguration befindet.

5. Füllstation (1) nach einem der vorhergehenden Ansprüche, wobei die Steuereinheit (4) so konfiguriert ist, dass sie das aktive Funkidentifikationsmodul so steuert, dass das aktive Funkidentifikationsmodul:
- die Anwesenheit des passiven Funkidentifikationsmoduls erfasst, wenn sich das Verbindungsorgan (3) in der ersten Konfiguration befindet;
- Daten mit dem passiven Funkidentifikationsmodul austauscht, wenn sich das Verbindungsorgan (3) in der ersten Konfiguration befindet.

6. Füllstation (1) nach einem der vorhergehenden Ansprüche, umfassend eine erste Kommunikationsschnittstelle (6), zum Beispiel mit einem entfernten Server, wobei die Steuereinheit (4) konfiguriert ist, um:
- über die erste Kommunikationsschnittstelle (6) mindestens ein erstes Datum zu erzeugen oder zu empfangen oder vom passiven Funkidentifikationsmodul über das aktive Funkidentifikationsmodul zu empfangen, insbesondere ein Authentifizierungsdatum oder ein Füllsitzungsdatum oder ein Verschlüsselungsdatum, wobei das erste Datum insbesondere zur einmaligen Verwendung bestimmt ist;
- das aktive Funkidentifikationsmodul so zu steuern, dass das aktive Funkidentifikationsmodul mindestens ein zweites Datum mit dem passiven Funkidentifikationsmodul austauscht, wobei sich das Verbindungsorgan in der ersten Konfiguration befindet und das Funkidentifikationsmodul das passive Funkidentifikationsmodul mit Energie versorgt;
- eine Genehmigung zum Füllen des Behälters über die erste Kommunikationsschnittstelle (6) vor der Steuerung eines Befüllens mit Fluid zu empfangen.

7. Füllstation (1) nach einem der vorhergehenden Ansprüche, wobei das Verbindungsorgan (3) so konfiguriert ist, dass es dicht mit einem Einlass (7) eines zu füllenden Druckfluidbehälters verbunden werden kann.

8. Anlage (10), umfassend eine Füllstation (1) nach einem der vorhergehenden Ansprüche und ein Fahrzeug (8), das einen Einlass (7) eines zu füllenden Druckfluidbehälters umfasst, wobei der Einlass (7) des Druckfluidbehälters ein zweites aktives Funkidentifikationsmodul umfasst, das eine dritte Antenne umfasst, wobei das Verbindungsorgan (3) so konfiguriert ist, dass es sich in einer dritten Konfiguration befindet, in der es, insbesondere abnehmbar und dicht, mit dem Einlass (7) des Druckfluidbehälters verbunden ist, wobei das zweite aktive Funkidentifikationsmodul so konfiguriert ist, dass die dritte Antenne ein Magnetfeld erzeugt, das geeignet ist, das passive Funkidentifikationsmodul mit Energie zu versorgen, wenn sich das Verbindungsorgan (3) in der dritten Konfiguration befindet.

9. Anlage (10) nach dem vorhergehenden Anspruch, wobei die dritte Antenne mindestens eine Windung umfasst, wobei das Verbindungsorgan (3) und der Einlass (7) des Druckfluidbehälters so konfiguriert sind, dass sich mindestens eine Windung der ersten Antenne in derselben Ebene erstreckt wie die Ebene, in der sich mindestens eine Windung der dritten Antenne erstreckt, wenn sich das Verbindungsorgan (3) in der dritten Konfiguration befindet.

10. Anlage (10) nach einem der Ansprüche 8 und 9, wobei das Fahrzeug (8) eine zweite Steuereinheit umfasst, die konfiguriert ist, um das zweite aktive Funkidentifikationsmodul so zu steuern, dass das zweite aktive Funkidentifikationsmodul:
- die Anwesenheit des passiven Funkidentifikationsmoduls erfasst, wenn sich das Verbindungsorgan (3) in der dritten Konfiguration befindet;
- Daten mit dem passiven Funkidentifikationsmodul austauscht, wobei sich das Verbindungsorgan (3) in der dritten Konfiguration befindet und das zweite Funkidentifikationsmodul das passive Funkidentifikationsmodul mit Energie versorgt.

11. Verfahren zur Sicherung eines Befüllens eines Druckfluidbehälters unter Verwendung einer Anlage, die eine Füllstation (1) für einen Druckfluidbehälter umfasst, umfassend:
- eine Druckfluidquelle;
- eine Fluidtransferleitung (2), die ein mit der Druckfluidquelle verbundenes stromaufwärtiges Ende und ein stromabwärtiges Ende umfasst;
- ein mit dem stromabwärtigen Ende verbundenes Verbindungsorgan (3) ;
- eine Steuereinheit (4), die konfiguriert ist, um ein Befüllen mit Fluid zu steuern;
- ein Gehäuse (5) zur Aufnahme des Verbindungsorgans, wobei das Gehäuse insbesondere an einer festen Position ist, wobei das Gehäuse und das Verbindungsorgan so konfiguriert sind, dass das Verbindungsorgan in Bezug auf das Gehäuse abnehmbar ist, wobei das Verbindungsorgan so konfiguriert ist, dass es sich in einer ersten Konfiguration befindet, in der es vom Gehäuse aufgenommen wird, und in einer zweiten Konfiguration, in der es sich außerhalb des Gehäuses befindet; **gekennzeichnet durch**
eine erste Kommunikationsschnittstelle, zum Beispiel mit einem entfernten Server;
das Verbindungsorgan, das ein passives Funkidentifikationsmodul mit einer ersten Antenne umfasst, das Gehäuse, das ein aktives Funkidentifikationsmodul mit einer zweiten Antenne umfasst, wobei das aktive Funkidentifikationsmodul so konfiguriert ist, dass die zweite Antenne ein Magnetfeld erzeugt, das geeignet ist, das passive Funkidentifikationsmodul mit Energie zu versorgen, wenn sich das Verbindungsorgan in der ersten Konfiguration befindet, die Anlage ein Fahrzeug umfasst, das einen Einlass eines zu füllenden Druckfluidbehälters umfasst, der Einlass des Druckfluidbehälters ein zweites aktives Funkidentifikationsmodul mit einer dritten Antenne umfasst, das Verbindungsorgan so konfiguriert ist, dass es sich in einer dritten Konfiguration befindet, in der es, insbesondere abnehmbar und dicht, mit dem Einlass des Druckfluidbehälters verbunden ist, das zweite aktive Funkidentifikationsmodul so konfiguriert ist, dass die dritte Antenne ein Magnetfeld erzeugt, das geeignet ist, das passive Funkidentifikationsmodul mit Energie zu versorgen, wenn sich das Verbindungsorgan in der dritten Konfiguration befindet; wobei das Verfahren die folgenden Schritte umfasst:
a) Erzeugen von mindestens einem ersten Datum, insbesondere einem Authentifizierungsdatum oder einem Füllsitzungsdatum oder einem Verschlüsselungsdatum, wobei das erste Datum insbesondere zur einmaligen Verwendung bestimmt ist, wobei das erste Datum insbesondere von der ersten Kommunikationsschnittstelle empfangen oder von der Steuereinheit erzeugt oder vom passiven Funkidentifikationsmodul erzeugt wird;
b) Austauschen von mindestens einem zweiten Datum zwischen dem aktiven Funkidentifikationsmodul und dem passiven Funkidentifikationsmodul, wobei sich das Verbindungsorgan in der ersten Konfiguration befindet und das aktive Funkidentifikationsmodul das passive Funkidentifikationsmodul mit Energie versorgt;
c) Austauschen von mindestens einem dritten Datum zwischen dem zweiten aktiven Funkidentifikationsmodul und dem passiven Funkidentifikationsmodul, wobei sich das Verbindungsorgan in der dritten Konfiguration befindet und das zweite aktive Funkidentifikationsmodul das passive Funkidentifikationsmodul mit Energie versorgt;
d) Empfangen einer Genehmigung zum Füllen des Behälters über die erste Kommunikationsschnittstelle, insbesondere wenn das dritte Datum gleich einem vorbestimmten Wert ist, der vom ersten Datum und/oder dem zweiten Datum abhängt.

## Claims

1. A filling station (1) for a pressurized fluid tank, in particular for pressurized gaseous hydrogen, comprising:
- a source of pressurized fluid;
- a fluid transfer line (2) comprising an upstream end connected to the source of pressurized fluid and a downstream end;
- a connecting member (3) connected to the downstream end;
- a control unit (4) configured to control a filling with fluid;
**characterized in that** the station further comprises
- a housing (5) for receiving the connecting member, the housing (5) being notably at a fixed position, the housing (5) and the connecting member (3) being configured to allow the connecting member (3) to be removable with respect to the housing (5), the connecting member (3) being configured to be in a first configuration in which it is received by the housing (5) and to be in a second configuration in which it is outside the housing (5); the connecting member (3) comprising a passive radio-frequency identification module comprising a first antenna, the housing (5) comprising an active radio-frequency identification module comprising a second antenna, the active radio-frequency identification module being configured so that the second antenna generates a magnetic field suitable for supplying power to the passive radio-frequency identification module, when the connecting member is in the first configuration.

2. The filling station (1) according to the preceding claim, wherein the active radio-frequency identification module is configured to allow a magnetic coupling between the first antenna and the second antenna, when the connecting member (3) is in the first configuration.

3. The filling station (1) according to one of the preceding claims, wherein the first antenna and the second antenna each comprise at least one turn.

4. The filling station (1) according to the preceding claim, wherein the connecting member (3) and the housing (5) are configured so that at least one turn of the first antenna extends in the same plane as the plane in which at least one turn of the second antenna extends, when the connecting member (3) is in the first configuration.

5. The filling station (1) according to one of the preceding claims, wherein the control unit (4) is configured to control the active radio-frequency identification module so that the active radio-frequency identification module:
- detects the presence of the passive radio-frequency identification module when the connecting member (3) is in the first configuration;
- exchanges data with the passive radio-frequency identification module when the connecting member (3) is in the first configuration.

6. The filling station (1) according to one of the preceding claims, comprising a first communication interface (6), for example with a remote server, the control unit (4) being configured to:
- generate or receive via the first communication interface (6) or receive from the passive radio-frequency identification module via the active radio-frequency identification module, at least a first datum, notably an authentication datum or a filling session datum or an encryption datum, the first datum being notably for single use;
- control the active radio-frequency identification module so that the active radio-frequency identification module exchanges at least a second datum with the passive radio-frequency identification module, the connecting member being in the first configuration, the radio-frequency identification module supplying power to the passive radio-frequency identification module;
- receive an authorization to fill the tank, via the first communication interface (6), prior to the control of a filling with fluid.

7. The filling station (1) according to one of the preceding claims, wherein the connecting member (3) is configured to be connected in a sealed manner to an inlet (7) of a pressurized fluid tank to be filled.

8. An installation (10) comprising a filling station (1) according to any one of the preceding claims and a vehicle (8) comprising an inlet (7) of a pressurized fluid tank to be filled, the inlet (7) of the pressurized fluid tank comprising a second active radio-frequency identification module comprising a third antenna, the connecting member (3) being configured to be in a third configuration in which it is connected, notably in a removable and sealed manner, to the inlet (7) of the pressurized fluid tank, the second active radio-frequency identification module being configured so that the third antenna generates a magnetic field suitable for supplying power to the passive radio-frequency identification module, when the connecting member (3) is in the third configuration.

9. The installation (10) according to the preceding claim, wherein the third antenna comprises at least one turn, the connecting member (3) and the inlet (7) of the pressurized fluid tank being configured so that at least one turn of the first antenna extends in the same plane as the plane in which at least one turn of the third antenna extends, when the connecting member (3) is in the third configuration.

10. The installation (10) according to one of claims 8 and 9, wherein the vehicle (8) comprises a second control unit configured to control the second active radio-frequency identification module so that the second active radio-frequency identification module:
- detects the presence of the passive radio-frequency identification module when the connecting member (3) is in the third configuration;
- exchanges data with the passive radio-frequency identification module, the connecting member (3) being in the third configuration, the second radio-frequency identification module supplying power to the passive radio-frequency identification module.

11. A method for securing a filling of a pressurized fluid tank using an installation comprising a filling station (1) for a pressurized fluid tank comprising:
- a source of pressurized fluid;
- a fluid transfer line (2) comprising an upstream end connected to the source of pressurized fluid and a downstream end;
- a connecting member (3) connected to the downstream end;
- a control unit (4) configured to control a filling with fluid;
- a housing (5) for receiving the connecting member, the housing being notably at a fixed position, the housing and the connecting member being configured to allow the connecting member to be removable with respect to the housing, the connecting member being configured to be in a first configuration in which it is received by the housing and to be in a second configuration in which it is outside the housing; **characterized by**
a first communication interface, for example with a remote server;
the connecting member comprising a passive radio-frequency identification module comprising a first antenna, the housing comprising an active radio-frequency identification module comprising a second antenna, the active radio-frequency identification module being configured so that the second antenna generates a magnetic field suitable for supplying power to the passive radio-frequency identification module, when the connecting member is in the first configuration, the installation comprising a vehicle comprising an inlet of a pressurized fluid tank to be filled, the inlet of the pressurized fluid tank comprising a second active radio-frequency identification module comprising a third antenna, the connecting member being configured to be in a third configuration in which it is connected, notably in a removable and sealed manner, to the inlet of the pressurized fluid tank, the second active radio-frequency identification module being configured so that the third antenna generates a magnetic field suitable for supplying power to the passive radio-frequency identification module, when the connecting member is in the third configuration; the method comprising the steps of:
a) generating at least a first datum, notably an authentication datum or a filling session datum or an encryption datum, the first datum being notably for single use, the first datum being notably received by the first communication interface or generated by the control unit or generated by the passive radio-frequency identification module;
b) exchanging at least a second datum between the active radio-frequency identification module and the passive radio-frequency identification module, the connecting member being in the first configuration, the active radio-frequency identification module supplying power to the passive radio-frequency identification module;
c) exchanging at least a third datum between the second active radio-frequency identification module and the passive radio-frequency identification module, the connecting member being in the third configuration, the second active radio-frequency identification module supplying power to the passive radio-frequency identification module;
d) receiving an authorization to fill the tank via the first communication interface, notably if the third datum is equal to a predetermined value dependent on the first datum and/or the second datum.
